(19) Europäisches Patentamt
European Patent Office
Office européen des brevets

(11) Veröffentlichungsnummer: **0 054 176**
**A2**

# (12) EUROPÄISCHE PATENTANMELDUNG

(21) Anmeldenummer: 81109399.6

(51) Int. Cl.³: **B 29 H 19/00**

(22) Anmeldetag: 30.10.81

(30) Priorität: 08.12.80 HU 293880

(43) Veröffentlichungstag der Anmeldung: 23.06.82 . Patentblatt 82/25

(84) Benannte Vertragsstaaten: AT BE CH DE FR GB IT LI LU NL SE

(71) Anmelder: Taurus Gumiipari Vállalat
Kerepesi ut 17
Budapest VIII(HU)

(72) Erfinder: Gündisch, Gusztáv
Béla Király ut 5
H-1125 Budapest(HU)

(72) Erfinder: Gelencser, Sándor
Batthányi u. 46
H-1015 Budapest(HU)

(72) Erfinder: Kiesswetter, Walter
Nyár utca 55
H-1043(HU)

(74) Vertreter: Patentanwälte Viering & Jentschura
Steinsdorfstrasse 6
D-8000 München 22(DE)

## (54) Verfahren zum Rückgewinnen von Bestandteilen verbrauchter Luftreifen.

(57) Verfahren zum Rückgewinnen von Bestandteilen verbrauchter Luftreifen, deren Karkasse außer Gummibestandteilen (5, 6) und Verstärkungsmaterialien (4) in den Reifenwülsten angeordnete, als Stahlseilringe ausgebildete Wulstkerne (1-3) aufweist. Zur Rückgewinnung der Wulstkerne für deren Wiederverwendung in neuen Luftreifen werden die den Wulstkern enthaltenden Karkassen-Bestandteile der Reifenwülste von dem verbrauchten Luftreifen abgetrennt, nach dem mechanischen Entfernen der Verstärkungs-materialien (4) und des größten Teils der Gummibestandteile (5, 6) die auf dem Wulstkern verbliebene Gummiumhüllung chemisch oder elektrotechnisch abgelöst, dann die Oberfläche der Wulstkerne gereinigt und die Oberfläche der gereinigten Wulstkerne chemisch oder galvanisch behandelt. Ggf. wird die äußerste Drahtlage (3) der Wulstkerne entfernt und durch eine neue Drahtlage ersetzt. Die elektrotechnische Behandlung besteht darin, daß die abgetrennten Wulstteile elektrisch aufgewärmt werden.

./...

EP 0 054 176 A2

Croydon Printing Company Ltd.

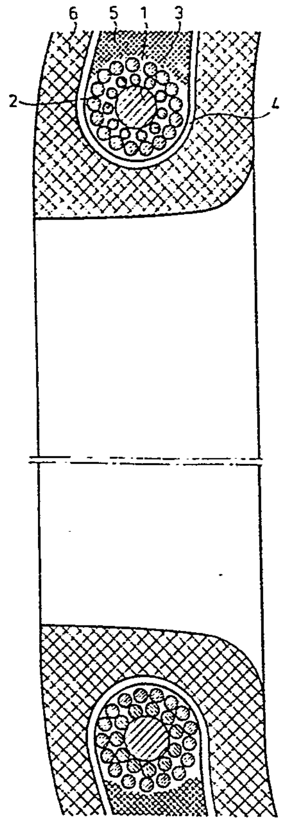

6
5
1
3
2
4

0054176

PATENTANWÄLTE

VIERING & JENTSCHURA

zugelassene Vertreter beim Europäischen Patentamt

Dipl.-Ing. Hans-Martin Viering · Dipl.-Ing. Rolf Jentschura · Steinsdorfstraße 6 · D-8000 München 22

# Verfahren zum Rückgewinnen von Bestandteilen verbrauchter Luftreifen

Die Erfindung betrifft ein Verfahren zum Rückgewinnen von Bestandteilen verbrauchter vulkanisierter Luftreifen.

Es sind mehrere Verfahren zum Rückgewinnen einzelner Bestandteile abgenützter Luftreifen bekannt. So wird zum Beispiel aus dem Gummi ein Gummimehl (Regenerat) hergestellt, das zu verschiedenen Zwecken (Isolierung und dgl.) beispielweise bei der Herstellung von Polstermöbeln verwendet wird. Bekanntlich sind jedoch die Reifenfüße oder Reifenwülste der Luftreifen von Fahrzeugrädern auch durch Wulstkerne verstärkt, die als aus mehreren Stahldrähten bestehende Stahlseilringe ausgebildet sind, die innerhalb der Reifenwülste in deren Gummibestandteile eingebettet sind und um welche die Verstärkungsmaterialien (gummierte Cordgewebeeinlagen aus Kunststoff- oder auch Baumwollfäden oder Stahllitzen und dgl.) der Karkasse zu ihrer Verankerung herumgelegt sind. Zur Rückgewinnung des Stahlmaterials der Wulstkerne verbrauchter Luftreifen ist es bekannt, die die Wulstkerne enthaltenden Reifenwulstteile von dem Luftreifen abzutrennen und in einen Schmelzofen einzubringen, in welchem die Gummibestandteile verbrannt und die Metallteile zurückgeschmolzen werden.

Demgegenüber werden gemäß der Erfindung die Wulstkerne als solche zurückgewonnen, so daß sie für die Herstellung neuer Luftreifen in diesen wieder verwendet werden können.

Die Erfindung macht von der Erkenntnis Gebrauch, daß insbesondere die Wulstkerne, die in den letzten Jahren vor allem bei den Radialkonstruktionen von Luftreifen verwendet werden, in ihrer mechanischen Festigkeit mehrfach überdimensioniert sind und daß außerdem bei der Benutzung der Luftreifen deren Wulstkerne im allgemeinen nicht derart beansprucht werden, daß sie dadurch eine bleibende Verformung bzw. eine vorzeitige Materialermüdung erleiden könnten. Vielmehr bleiben diese Wulstkerne in den verbrauchten Luftreifen unversehrt, so daß sie entsprechend der Erfindung für ihre neuerliche Verwendung zurückgewonnen werden können.

Durch die Erfindung wird daher die Aufgabe gelöst, ein Verfahren zum Rückgewinnen von Bestandteilen verbrauchter Luftreifen zu schaffen, durch welches deren Wulstkerne besser wiederverwertbar sind, als durch die Rückgewinnung nur des Stahlmaterials im Schmelzofen.

Dies wird gemäß der Erfindung dadurch erreicht, daß die die Wulstkerne enthaltenden Karkassen-Bestandteile der Reifenwülste von dem Luftreifen abgetrennt werden, die Verstärkungsmaterialien und Gummibestandteile der abgetrennten Karkassen-Bestandteile wenigstens größtenteils von den Wulstkernen mechanisch entfernt werden, danach an den Wulstkernen verbliebene Gummibestandteile chemisch oder elektrotechnisch, z.B. durch dielektrische Erwärmung, von den Wulstkernen abgetrennt werden und dann die Oberfläche der Wulstkerne gereinigt und galvanisch oder chemisch mit einem Vulkanisationshaftvermittler behandelt wird oder ggf. bei mehrlagigen Wulstkernen die äußerste Wulstkernlage entfernt wird und eine neue äußerste Wulstkernlage aufgebracht wird.

Durch das erfindungsgemäße Verfahren können die Wulstkerne derart aus den Reifenwülsten verbrauchter Luftreifen entfernt werden, daß sie nicht oder nur vernachlässigbar beschädigt werden. Dadurch können die zurückgewonnenen Wulstkerne in einen neuen Luftreifen eingebaut werden. Das mechanische Beseitigen der Verstärkungsmaterialien trägt dazu bei, die Haftung des durch Vulkanisation mit den Wulstkernen verbundenen Gummimaterials aufzubrechen.

Bei Luftreifen, bei denen die Karkasse nicht durch Stahlcord verstärkt ist, wird ein Verfahren verwendet, bei welchem die die Wulstkerne enthaltenden Wulstteile zusammen mit den Wulstkernen von dem Luftreifen abgetrennt werden und die verhältnismäßig dicke Gummischicht, von welcher sowohl die Stahlwulstkerne als auch die sonstigen Verstärkungsschichten umgeben sind, mechanisch zum Beispiel durch Zerreiben entfernt wird. Zu diesem Zweck geeignete Vorrichtungen sind weit und breit bekannt.

Nach dem Zerreiben der Gummischicht bleibt nur eine dünne vulkanisierte Schicht an der Oberfläche des Stahlwulstkernes zurück. Diese Schicht kann am einfachsten dadurch entfernt werden, daß das Gummimaterial in einem Lösungsmittel, zum Beispiel in Benzol oder Toluol, aufgeschwemmt wird. Nach der Aufschwemmung wird das Gummi so weich, daß es entweder manuell oder in einem entsprechenden mechanischen Verfahren maschinell entfernt werden kann.

Bei Luftreifen, deren Karkasse durch Stahlcord verstärkt ist, können die dicken Gummi- und sonstigen Verstärkungsschichten infolge der hohen mechanischen Festigkeit des Stahlcords auf rein mechanischem Wege nur mit Schwierigkeiten entfernt werden. In diesem Fall kann in einer Ausgestaltung des erfindungsgemäßen Verfahrens derart vorgegangen werden, daß die den Wulstkern enthaltenden Wulstteile zusammen mit dem Stahlcord vom Luftreifen abgeschnitten werden und dann der in das Gummi eingebettete Wulstkern derart erwärmt wird, daß durch die verwendete Wärme die Haftverbindung zwischen dem Gummi und dem Metall gelöst wird. Das Erwärmen wird vorzugsweise mittels einer elektrostatischen oder induktiven Heizeinrichtung durchgeführt. Eine derartige indirekte Erwärmung wird mit Hilfe auch auf anderen Gebieten an sich bekannter Einrichtungen durchgeführt. Nach dem Erwärmen der Haftgrenzschicht zwischen dem Gummi und dem Metall können die Stahlwulstkerne leicht aus dem Gummi mechanisch entfernt werden.

Um die Wulstkerne wieder brauchbar machen zu können, soll die Oberfläche der zurückgewonnenen Wulstkerne neu für Gummi haftfähig gemacht werden, damit die Wulstkerne wieder in einen neuen Luftreifen eingebaut werden können. Zu diesem Zweck werden die noch an den Wulstkernen anhaftenden Verunreinigungen von der Oberfläche der Wulstkerne vorzugsweise durch Sandstrahlen entfernt.

Nach der Beseitigung der Verunreinigungen wird die reine Metalloberfläche der Wulstkerne entweder galvanisch mit Kupfer überzogen oder es wird auf die Oberfläche ein unter dem Namen "Chemosil" bekanntes, die Haftfähigkeit verbesserndes Haftvermittlungsmittel aufgebracht. Beide Oberflächenbehandlungsmethoden sind in der Gummiindustrie bekannt und werden dort verwendet. Diese Behandlung der Wulstkernoberfläche kann sowohl unmittelbar nach dem Rückgewinnen des Wulstkernes als auch unmittelbar vor dessen erneutem Einbau in den neuen Luftreifen erfolgen.

Wenn die Wulstkerne der Luftreifen aus mehreren Drahtlagen bestehen, kann die äußerste Wulstkernlage entfernt und durch eine neue äußerste Wulstkernlage ersetzt werden. Diese Erneuerung der äußersten Wulstkernlage wird jedoch erst dann erforderlich, wenn diese beschädigt sein sollte.

Es sind auch Luftreifen mit Wulstkernen bekannt, deren Stahldrähte einzeln mit Gummi umgeben sind. Das erfindungsgemäße Verfahren ist geeignet, solche Wulstkerne zurückzugewinnen, die aus Drähten ohne eigene Gummiumhüllung bestehen.

Zur Erläuterung des erfindungsgemäßen Verfahrens ist in der Zeichnung ein von einem Luftreifen abgetrennter, den Wulstkern enthaltender Wulstteil im Radialschnitt dargestellt. Der Wulstkern besteht aus einem Kernring 1, einer inneren Drahtlage 2 und einer äußeren Drahtlage 3, mit welcher das Gummimaterial 5 durch Vulkanisation verbunden ist. Um den Wulstkern sind die Verstärkungsmaterialien 4 der Reifenkarkasse zu deren Verankerung herumgelegt. Die Außenschicht des Reifenwulstes wird durch die äußere Gummischicht 6 gebildet. Gemäß der Erfindung wird der Wulstkern von dem an die äußere Drahtlage 3 anvulkanisierten Gummi 5, dem die Reifenwand verstärkenden Stahlcord 4 und von der äußeren Gummischicht 6 derart abgetrennt, daß der Wulstkern nicht beschädigt wird und im ganzen oder allenfalls nach Erneuerung der äußeren Drahtlage 3 in einen neuen Luftreifen wieder eingebaut werden kann.

Patentansprüche

1. Verfahren zum Rückgewinnen von Bestandteilen verbrauchter Luftreifen, deren Karkasse außer Gummibestandteilen und Verstärkungsmaterialien in den Reifenwülsten angeordnete, als Stahlseilringe ausgebildete Wulstkerne aufweist, dadurch gekennzeichnet, daß zur Rückgewinnung der Wulstkerne für deren Wiederverwendung die die Wulstkerne enthaltenden Karkassen-Bestandteile der Reifenwülste von dem Luftreifen abgetrennt werden, die Verstärkungsmaterialien und Gummibestandteile der abgetrennten Karkassen-Bestandteile wenigstens größtenteils von den Wulstkernen mechanisch entfernt werden, danach an den Wulstkernen verbliebene Gummibestandteile chemisch oder elektrotechnisch von den Wulstkernen abgetrennt werden und dann die Oberfläche der Wulstkerne galvanisch oder chemisch mit einem Vulkanisationshaftvermittler behandelt wird oder ggf. bei mehrlagigen Wulstkernen die äußerste Wulstkernlage entfernt wird und eine neue äußerste Wulstkernlage aufgebracht wird.

2. Verfahren nach Anspruch 1, dadurch gekennzeichnet, daß der den Wulstkern enthaltende abgetrennte Wulstteil elektrotechnisch derart behandelt wird, daß die Bindungsgrenzschicht zwischen Gummi und Metall infolge einer induktiven oder dielektrischen Aufwärmung erwärmt wird.

3. Verfahren nach Anspruch 1, dadurch gekennzeichnet, daß die äußeren Gummibestandteile und die Verstärkungsmaterialien der abgetrennten Karkassen-Bestandteile von den Wulstkernen durch Zerreiben abgelöst werden und die verbliebene Gummiumhüllung der Wulstkerne mit einem Lösungsmittel, wie Phenol oder Toluol oder dgl., aufgeschwemmt wird und der Wulstkern aus der aufgeschwemmten Gummiumhüllung entfernt wird.

4. Verfahren nach einem der Ansprüche 1 bis 3, dadurch gekennzeichnet, daß die Reinigung der Oberfläche der Wulstkerne durch Sandstrahlen erfolgt, wonach die Metalloberfläche der Wulstkerne mit Kupfer galvanisch überzogen oder mit einem chemischen Haftmittlungsmittel überzogen wird.

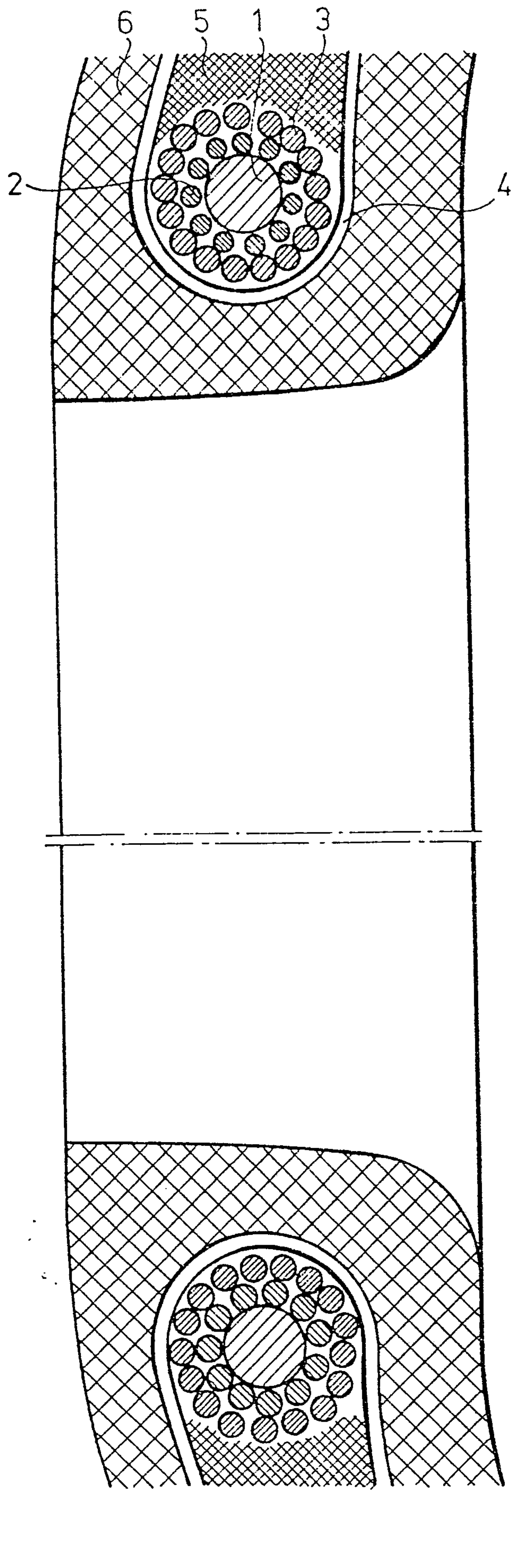
6
5
1
3
2
4